# EUROPÄISCHE PATENTSCHRIFT

(11) **EP 0 763 466 B1**
(45) Veröffentlichungstag und Bekanntmachung des Hinweises auf die Patenterteilung: **17.05.2000**
(21) Anmeldenummer: 96112298.3
(22) Anmeldetag: 30.07.1996
(51) Int. Cl.: B64D 11/06, B60N 2/48

(54) **Versorgungseinheit für Passagiere, insbesondere in einer Passagierkabine eines Flugzeuges**
Passenger service unit, particularly for aircraft passengers
Unité de service pour passagers, en particulier pour passagers d'avion

(30) Priorität: 14.09.1995 DE 19534025
(43) Veröffentlichungstag der Anmeldung: 19.03.1997
(73) Patentinhaber: DaimlerChrysler Aerospace Airbus Gesellschaft mit beschränkter Haftung, 21129 Hamburg (DE)
(72) Erfinder: Schumacher, Markus, 21614 Buxtehude (DE); Muin, Andrew, 21614 Buxtehude (DE)
(74) Vertreter: Hansmann, Dierk, Dipl.-Ing.

(56) Entgegenhaltungen:
- DE-A- 3 719 105
- FR-A- 2 507 152
- US-A- 2 863 494

## Beschreibung

Die Erfindung betrifft eine Passagierkabine, insbesondere in einem Flugzeug, mit mindestens einem Passagiersitz und mindestens einer Versorgungseinheit für Passagiere, wobei die Versorgungseinheit mit Komfort- und Bedienelementen, wie Leseleuchte, Stewardruftaste, Lautsprecher, Luftdüse, Sauerstoffmaske und -generator und optische Anzeigeelemente ausgestattet ist und mindestens eine Zuführleitung zwischen einer Versorgungsleitung und der mindestens einen Versorgungseinheit vorgesehen ist.

Aus DE 43 01 681 C1 ist bekannt, daß sich in der Kabine eines Passagierflugzeuges derartige Versorgungseinheiten - passenger service unit (PSU) genannt - jeweils für eine Sitzreihe unterhalb der im oberen Kabinenbereich angeordneten Gepäckablagen befinden. In zunehmendem Maße werden solche Gepäckablagen mit einer absenkbaren Schale ausgestattet. Dies läßt aber eine Position der Versorgungseinheit im Bereich der Mitte einer Sitzreihe nicht zu, da diese bei Abwärtsbewegung der Schale mit derselben kollidiert. Folglich werden die Versorgungseinheiten nach bekannter Art in Richtung Fenster verlegt, wo sie aber für die gangseitigen Passagiere schlecht erreichbar sind. So entsteht ein Konfliktbereich, wobei insbesondere die Passagiere, die die Versorgungseinheit schlechter erreichen, die anderen Passagiere beim Zugriff zur Versorgungseinheit stören können.
Ein großzügiger Raumeindruck der Passagierkabine ist ein weiteres wesentliches Merkmal, das für den Komfort und das Wohlbefinden der Passagiere ausschlaggebend ist. Die Anordnung der Versorgungseinheit verschlechtert diesen positiven Eindruck. Infolge des jeweils notwendigen Zugriffsbereiches eines Passagieres zur Versorgungseinheit wird der freie Kopfbereich eingeschränkt und die Kabineninnenkontur ist entsprechend niedrig an dieser Stelle.
Bei einer Sitzlayoutänderung innerhalb der Passagierkabine sind darüber hinaus die Versorgungseinheiten ebenfalls neu zu positionieren. Das bedeutet einen erheblichen zusätzlichen Montage- und Wartungsaufwand.

Fluggastsitze, die zur Versorgung der Passagiere bestimmte Komfort- und Bedienelemente aufweisen, sind ebenfalls bekannt. Beispielsweise zeigt die DE 37 19 105 A1 einen Fluggastsitz, in den Kommunikationselemente, wie Empfangsteile, Lautsprecher, Video-Anschlüsse, Bedienelemente und Leseleuchten integriert sind. Die Kommunikations- und Bedienelemente werden hierbei mittels eines drahtlos arbeitenden Informationssystems gespeist und mit einer dem Sitz zugeordneten Energiequelle betrieben.

Aus DE 42 27 377 A1 ist ein weiterer Fluggastsitz bekannt, der ein Sauerstoffnotsystem enthält. Wie eine Anordnung von weiteren Komponenten für die Versorgung der Passagiere erfolgt, ist dieser Lösung nicht entnehmbar.

Für die Durchführung von Versorgungs-, Überwachungs-, Unterhaltungs-, Informations- und Managementfunktionen wird in DE 34 44 802 C2 vorgeschlagen, daß Datenterminals am Passagiersitz, insbesondere an den Rückseiten der Rückenlehnen angeordnet sind. Der Fluggast kann mittels des Terminals Informationen sammeln, bestimmte Arbeiten ausführen oder sich unterhalten lassen. Über die Anordnung anderer passagierbezogener Systeme, wie Stewartruf, Bordsprechanlage, Leseleuchten und Luftdüsen ist der Schrift nichts entnehmbar.
Der bekannte Stand der Technik zeigt somit Einzelkomponenten bzw. Einzelsysteme, die von einem Gesamtversorgungssystem weitgehend unabhängig funktionieren, in einen Sitz integriert werden können und somit baulicher Bestandteil des Sitzes sind. Eine funktionale Zusammenlegung aller Komponenten, die von einer Versorgungsleitung gespeist und in Form einer Versorgungseinheit - getrennt vom Fluggastsitz - dem Passagier zur Verfügung stehen, ist aber nicht bekannt.

Demgemäß liegt der Erfindung die Aufgabe zugrunde, eine gattungsgemäße Passagierkabine derart auszubilden, daß alle passagierbezogenen Versorgungsfunktionen in eine Versorgungseinheit zusammengefaßt und im Zugriffsbereich eines in einem Passagiersitz sitzenden Passagieres bequem erreichbar sind. Eine Integration in einen Fluggastsitz soll vermieden werden, um eine Trennung von flugzeugspezifischen Systemen und den Fluggastsitzen zu erreichen. Weiterhin sind störende Bauteile im Kopfbereich der Passagiere zu vermeiden.

Diese Aufgabe wird mit den in Patentanspruch 1 angegebenen Maßnahmen gelöst. Die erfindungsgemäße Versorgungseinheit ist in Ergänzung eines Passagiersitzes vorgesehen und als eine Säule ausgebildet, die seitlich des zugeordneten Sitzes angeordnet ist.

Dabei ist insbesondere von Vorteil, daß der auf seinem Sitzplatz befindliche Passagier bequem die Versorgungsfunktionen bedienen kann, ohne seinen Nachbarn zu stören. Durch Wegfall der Passagierversorgungsfunktionen im Bereich unterhalb der Gepäckablagen wird ein großzügiger Raumeindruck der Passagierkabine erreicht, was sich auf den Komfort und das Wohlbefinden der Passagiere positiv auswirkt.
Auch ist mit der sitzzugeordneten Anordnung aller Passagierversorgungsfunktionen bei Änderungen des Sitzlayouts keine aufwendige Anpassung der Versorgunseinheit notwendig und die Layoutflexibilität ist entscheidend verbessert.

Mit der Zusammenlegung aller Einzelkomponenten in eine Versorgungseinheit ist eine gesonderte Anbringung von Komfort- und Bedienelementen weitgehend verzichtbar und somit der Montage- und Wartungsaufwand verringert. Es wird eine funktionale Übersichtlichkeit erreicht, die einem Passagier die Bedienung der Versorgungsfunktionen erleichtert.

Weiterbildungen und zweckmäßige Ausgestaltungen ergeben sich aus den Unteransprüchen 2 - 8.

Mit der Maßnahme gemäß Anspruch 2 ist erreicht, das Teile der Säule gleichzeitig ein Funktionsteil des Sitzes bilden.

Die Ausgestaltung gemäß Anspruch 3 ermöglicht eine Abschirmung zum Nachbarsitz. Gleichzeitig ist es möglich, am Kopfteil Komfortelemente, beispielsweise Lichtquellen, sitzübergreifend zur Verfügung zu stellen.

Die Ausgestaltungen gemäß der Ansprüche 4, 5 bzw. 6 zeigen alternative Anordnungsmöglichkeiten der einem Sitz zugeordneten Säule.

Mit der Realisierung der Maßnahme gemäß Anspruch 7 sind zusätzliche Bedienfunktionen im unmittelbaren Zugriffsbereich eines Passagiers auf einem hinteren Passagiersitz leicht erreichbar.

Die Maßnahme gemäß Anspruch 8 zeigt eine vorteilhafte Anschlußmöglichkeit der Versorgungseinheit an eine zentrale Versorgungsleitung.

Die Erfindung wird nachstehend beschrieben, wobei die Ausbildung der Versorgungseinheit anhand der in der Zeichnung dargestellten Ausführungsbeispiele näher erläutert ist. In den Figuren sind gleiche Bauteile mit gleichen Bezugszeichen versehen.
Die Zeichnung zeigt
- in Fig. 1: eine perspektivische Darstellung einer Sitzgruppe in einer Ausgestaltung der Versorgungseinrichtung als Säule,
- in Fig. 2: die Säule gemäß Fig. 1 als Einzelheit,
- in Fig. 3: eine Teilansicht einer Sitzgruppe von hinten,
- in Fig. 4: ein Traggestell mit Adapterfunktion zur Aufnahme von Säulen einer Sitzgruppe,
- in Fign. 5, 6: eine zweite Ausführungsform der Säule, dargestellt in einer Anordnung mit der Sitzgruppe und als Einzelheit,
- in Fign. 7, 8: eine dritte Ausführungsform der Säule,
- in Fign. 9, 10: eine vierte Ausführungsfom der Säule,
- in Fign. 11,12: eine fünfte Ausführungsfom der Säule und
- in Fig. 13: eine Sitzansicht von hinten ohne Rückenlehne,

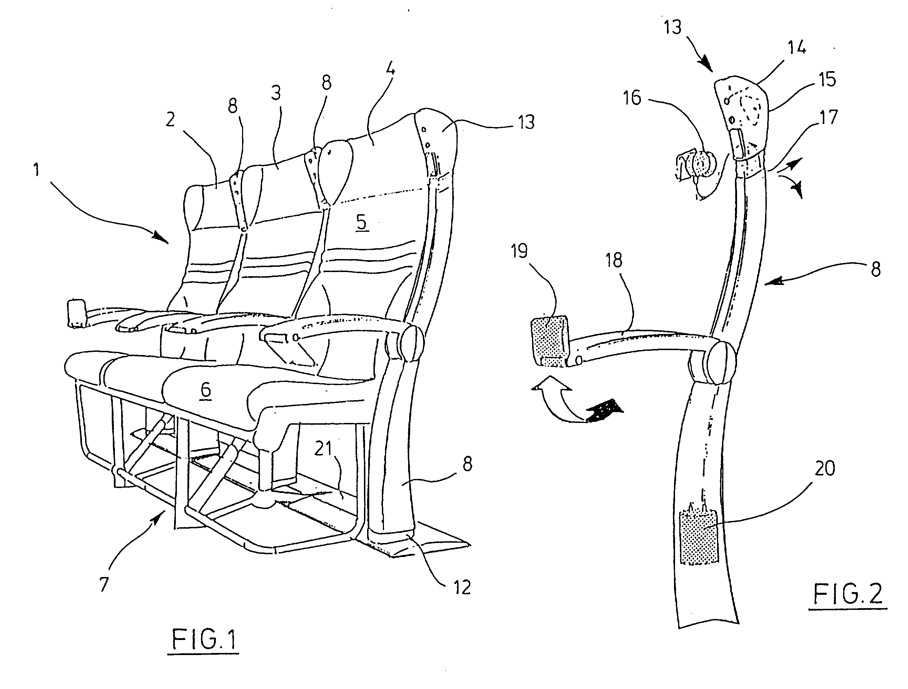

Die Fig. 1 zeigt eine Sitzgruppe 1, die aus mehreren Sitzen 2, 3, 4 mit jeweils einer Rückenlehne 5 und einem Sitzteil 6 besteht. Die Sitze 2, 3, 4 sind auf einem Traggestell 7 ortsfest angebracht. Jedem Sitz 2, 3, 4 ist unmittelbar eine Versorgungseinheit zugeordnet, die alle wesentlichen Komfort- und Bedienelemente für einen Passagier enthält. So kann der auf seinem Sitzplatz befindliche Passagier bequem die Komfort- und Bedienelemente bedienen, ohne seinen Nachbarn zu stören. Die in Fig. 1 gezeigte Ausführungsform der Versorgungseinheit als Säule 8 - gezeigt in Fig. 2 als Einzelheit - ist seitlich des Flugzeugsitzes 4 im Bereich der Rückenlehne angeordnet, mit seiner geschwungenen Form der Seitenkontur des Sitzes angepaßt und an der Fußbodenstruktur fixiert. In der gezeigten Anordnung der Säulen 8 erfolgt die Versorgung der Versorgungseinheiten über Zuführleitungen, die innerhalb einer Bodenplatte 21 angeordnet sind.

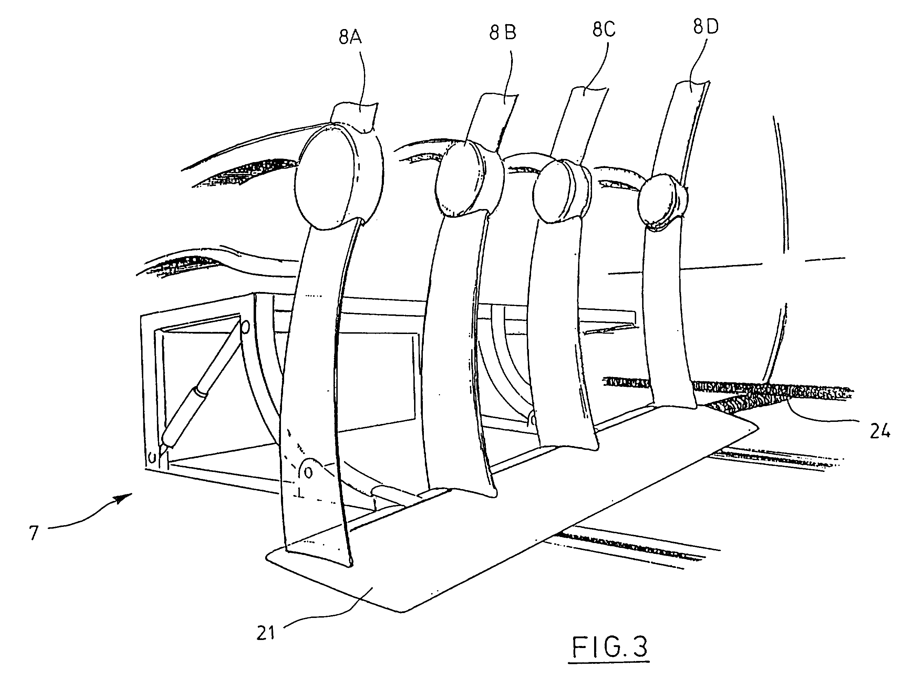

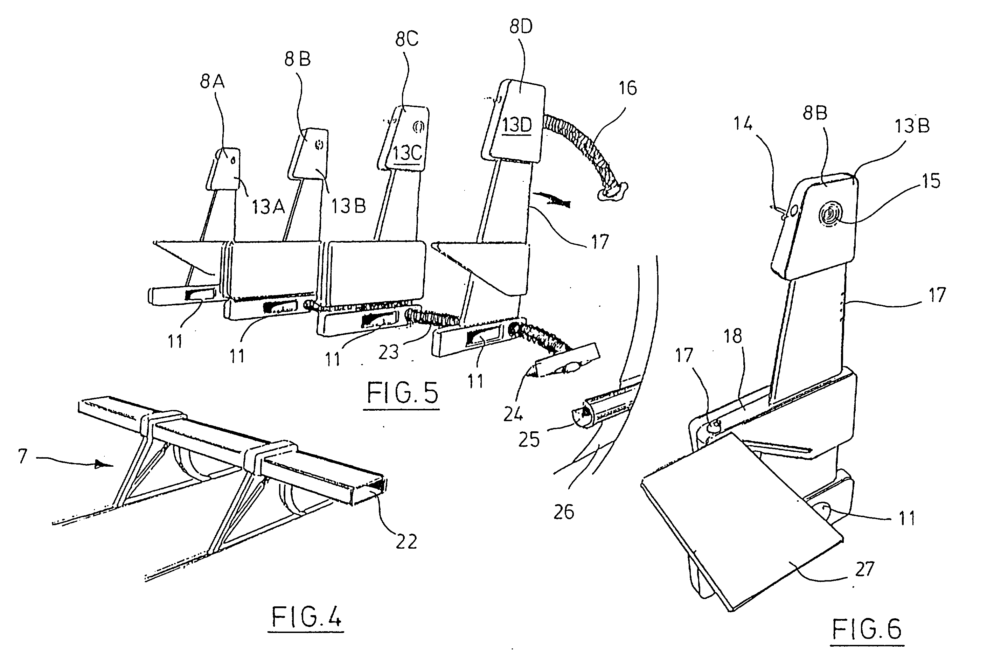

In Fig. 1 und in Fig. 2 ist gezeigt, daß die Säule 8 vom Fußboden bis zum Kopfbereich des Passagiersitzes reicht und im Kopfbereich als Kopfteil 13 ausgebildet ist. Damit kann eine Sichtblende zum Nachbarsitz ermöglicht werden. Das Kopfteil 13 als oberer Teil der Säule 8 beinhaltet wesentliche Komfort- und Bedienelemente, wie Leseleuchte 14, Lautsprecher 15 oder Kopfhöreranschlüsse und Sauerstoffmaske 16. Es können auch sitzübergreifende Versorgungsleistungen, beispielsweise eine Leuchte, vorgesehen sein. Eine Schwenkbarkeit des Kopfteiles oberen Teils der Säule 8 erhöht den Komfort, da die Position des entsprechenden Versorgungselementes an die Bedürfnisse des Passagiers angepaßt werden können.
Luftdüsen 17 können im rückwärtigen Teil der Säule angeordnet sein und so zusätzlich für eine komfortable, angenehme Klimatisierung des hinteren Passagiersitzes sorgen. Ein Teilstück jeder Säule ist als Armlehne 18 ausgebildet. Damit können bestimmte Passagierversorgungsfunktionen auch im Armlehnenbereich angeordnet werden. In der gezeigten Ausführung ist eine klappbare Bedientafel mit optischen Anzeigeelementen 19 vorgesehen, die nur bei Bedarf in Arbeitsposition bringbar ist und sonst unterhalb der Armlehne eingeklappt werden kann. Im Inneren der Säule 8 ist der Sauerstoffgenerator 20 angeordnet. In der Fig. 3 ist eine Teilansicht einer Sitzgruppe im Bereich des Traggestells 7 von hinten ersichtlich. Die Bodenplatte 21 ist als mögliches Verbindungsmittel zwischen den als Säulen 8A bis 8D ausgebildeten Versorgungseinheiten einer Sitzgruppe 1 vorgesehen. Die Bodenplatte 21 dient zur Aufnahme der Zuführleitungen, die einer Versorgungsleitung 25 (gezeigt in Fig. 5) adaptiert sind. Die Versorgungsleitung 25 enthält für alle in den Säulen befindlichen Komfort- und Bedienelementen die notwendigen Funktionsmittel in separaten Leitungen, wie beispielsweise eine Luftleitung für die Frischluftzufuhr der Luftdüsen 17 und elektrische Energie- bzw. Signalübertragungsleitungen für die Leseleuchte 14 oder den optischen Anzeigeelementen in der Bedientafel 19. Die Versorgungsleitung 25 ist vorteilhaft im Fußbodenbereich an der Kabinenaußenwand hinter Verkleidungsteilen 26 angeordnet.

In Fig. 4 ist ein Traggestell 7 dargestellt. Es ist mit einem Querträger 22 mit Adapterfunktion versehen, der zur Aufnahme von Säulen 8 dient und gleichzeitig die Sitzteile 2, 3, 4 tragen kann.
Die in Fig. 5 gezeigten Säulen 8A bis 8D in einer zweiten Ausführung sind im unteren Bereich mit Aussparungen 11 versehen. Die Säulen können mit diesen Aufnahmen auf dem Querträger 22 angebracht werden und fußen somit auf dem ortsfesten Traggestell 7. Ein Verbindungsrohr 23 dient zur Aufnahme der Zuführleitungen verbindet die Komfort- und Bedienelemente innerhalb der Säulen 8A bis 8D einer Sitzgruppe über einen flexiblen Versorgungsanschluß 24 mit einer Versorgungsleitung 25. Die Versorgungsleitung 25 ist vorteilhaft im Fußbodenbereich an der Kabinenaußenwand hinter Verkleidungsteilen 26 angeordnet.

In Fig. 6 ist beispielhaft eine einzelne Säule 8B gemäß der zweiten Ausführungsform als Säule ersichtlich, die in Fig. 5 in Verbindung mit den anderen Säulen 8A, 8C und 8D über ein Versorgungsrohr 23 gezeigt ist. Die Säule 8B bildet einen flach ausgeführten Ständer, der gleichzeitig als trennendes Element eine Abschirmung zum Nachbarsitz ermöglichen. Das obere Teil der Säule 8B ist vergrößert und dient so als Kopfteil 13B im Kopfbereich der Passagiere. Im Kopfteil 13B können wichtige Versorgungsfunktionen vorgesehen werden. So sind Leseleuchte 14 und Lautsprecher 15 in diesem Teil der Säule vorgesehen. Sauerstoffmaske 16, Sauerstoffgenerator 20 und Luftdüse 17 sind am rückwärtigen Teil der Säule 8A bis 8D angeordnet und für einen dahinter liegenden Passagiersitz vorgesehen. Die Säule 8B beinhaltet neben den bisher genannten Versorgungsfunktionen einen Tisch 27 mit Kommunikations- und Bedienelementen, der an der Armlehne 18 angeordnet ist und nur bei Bedarf ausgeklappt wird.

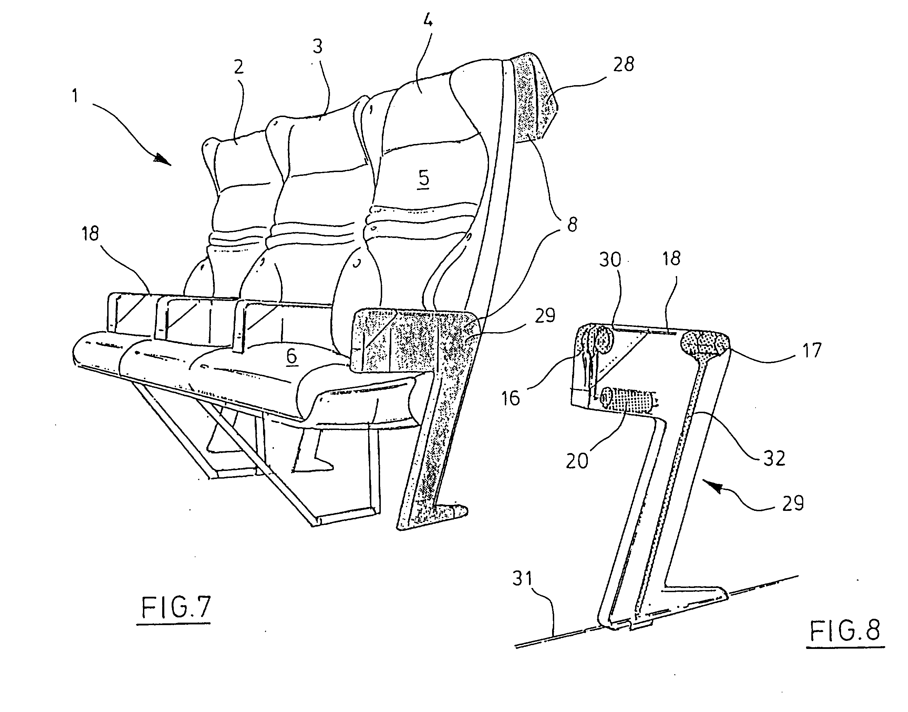

Die Fign. 7 und 8 zeigen eine dritte Ausführungsform der Säule 8. Hier ist die Säule zweigeteilt in ein oberes Säulenteil 28 und ein unteres Säulenteil 29. Das obere Säulenteil 28 ist jeweils an der Rückwand der Rückenlehne 5 eines Sitzes 2, 3 oder 4 im Bereich der Kopfstütze angeordnet und liegt somit mit den Bedien- und Komfortelementen im optimalen Bedien- und Zugriffsbereich eines Passagieres auf dem dahinter angeordneten Passagiersitz.

Wie in Fig. 8 gezeigt, sind der Sauerstoffgenerator 20 und die mit einer Abdeckung 30 versehene Sauerstoffmaske 16 in dem als Armlehne 18 ausgebildeten Teil der Säule untergebracht. Auch ist die Luftdüse 17 für den hinteren Passagiersitz im rückwärtigen Bereich des unteren Säulenteiles 29 angeordnet. Hierbei ist vorgesehen, die Luftzuführung über eine Versorgungsschiene 31 zu realisieren, die im Bereich der Sitzschienen die Luft zur Verfügung stellt und über eine Abzapfleitung 32 zur Luftdüse 17 leitet. In der gezeigten Anordnung kann ein Versorgungsanschluß an die zentrale Versorgungsleitung ebenfalls im Bereich unterhalb des Fußbodens in Nähe des Sitzschiene der zu versorgenden Sitzgruppen verlaufen.

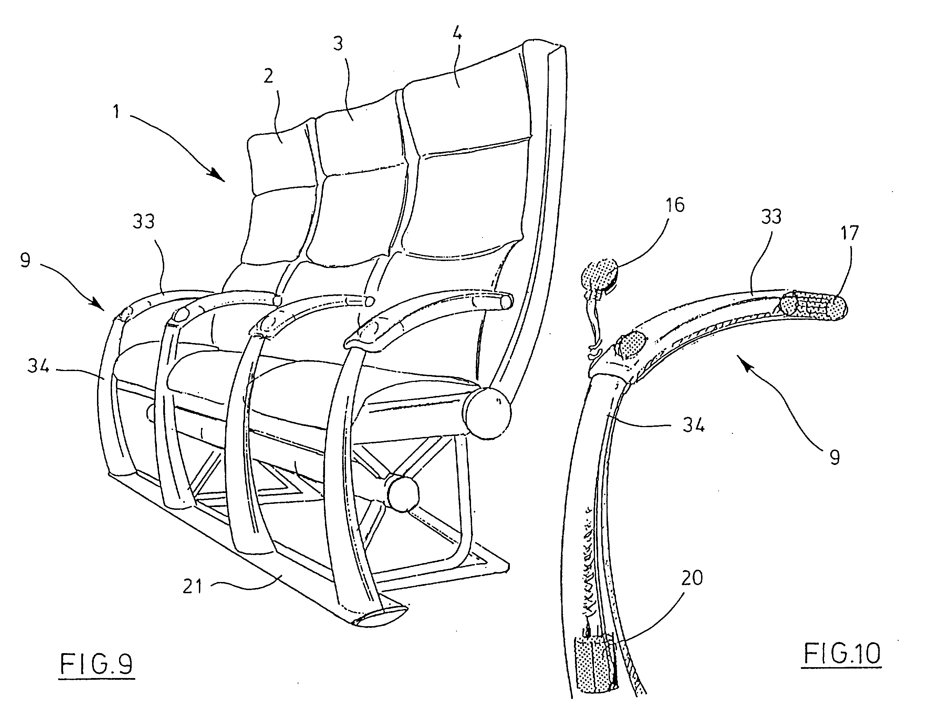

Eine vierte Ausführungsform der Säule ist in den Fign. 9 und 10 gezeigt in einer Anordnung innerhalb der Sitzgruppe 1 und als Einzelheit. Hierbei ist die Säule als Säulenbogen 9 ausgeführt. Der obere Teil bildet eine Armlehne 33, die sich an einem Ständer 34 abstützt. Die sitzseitige Armlehne kann somit entfallen. Der Ständer 34 ist im vorderen Bereich des Sitzes an der Fußbodenstruktur fixiert und im Fußbereich an einer Bodenplatte 21 angeordnet, in der die Zuführleitungen zu den Komfort - und Bedienelementen verlaufen. Im Ständer 34 ist der Sauerstoffgenerator 20 integriert, der über Leitungen mit der Sauerstoffmaske 16 verbunden ist. Die Sauerstoffmaske 16 ist im Bereich der Handauflage in die Armlehne 33 integriert. Beim Bedarfsfall wird sie automatisch ausgeworfen bzw. ausgefahren, um unmittelbar in den Zugriffsbereich des Passagieres zu gelangen. Am Ende der Säule im rückenlehnenseitigen Bereich der Armlehne 33 ist eine Luftdüse 17 angeordnet.

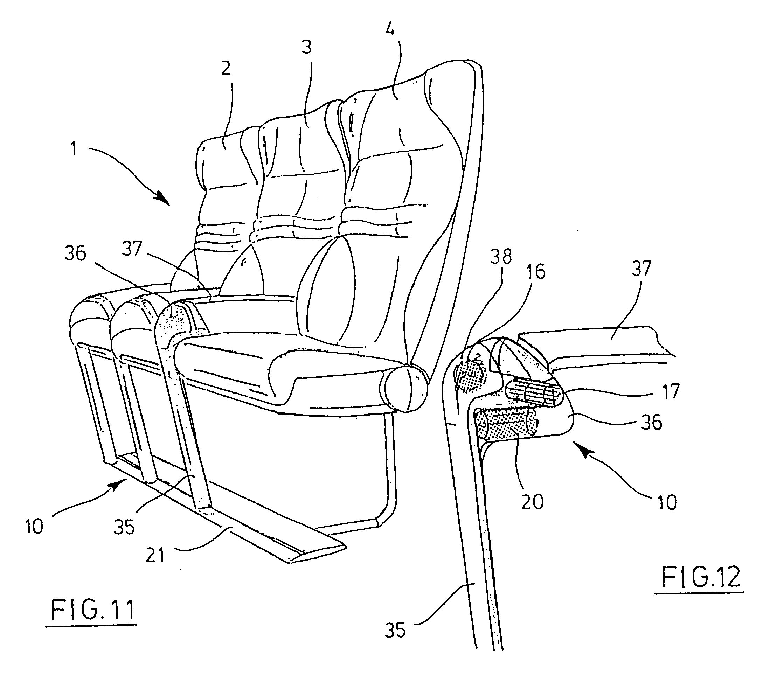

In den Fign. 11 und 12 ist eine fünfte Ausgestaltung der Säule als Halbsäule 10 in einer Anordnung innerhalb der Sitzgruppe 1 und als Einzelheit dargestellt. Diese Ausgestaltung der Halbsäule 10 als nahezu vertikal aufgerichteter Träger 35, der in Sitzhöhe endet und an dem ein Gehäusekopf 36 angeordnet ist, fußt auf dem Fußboden und ist im Fußbereich an der Bodenplatte 21 angeordnet, in der die Zuführleitungen verlaufen. Die Bedien- und Komfortelemente sind in dem Gehäusekopf 36 untergebracht. Der Gehäusekopf 36 endet unmittelbar am vorderen Ende einer sitzseitigen Armlehne 37 und liegt somit im unmittelbaren Zugriffsbereich eines Passagieres.

In Fig. 12 ist die Halbsäule 10 mit dem Träger 35 und daran angeordnetem Gehäusekopf 36 ersichtlich. Mit den schraffiert dargestellten Bauteilen ist die Lage der Sauerstoffmaske 16 im Eckbereich 38 des Gehäusekopfes 36, des Sauerstoffgenerators 20 im unteren Bereich des Gehäusekopfes 36 und der Luftdüse 17 im sitzzugewandten Bereich des Gehäusekopfes 36 erkennbar.

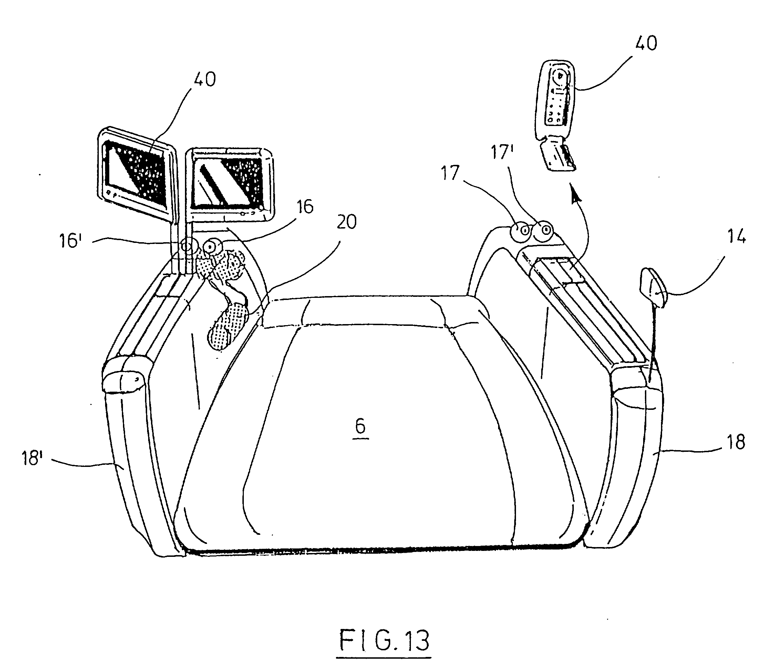

Die Figur 13 zeigt ein Sitzteil 6, ohne Rückenlehne in einer Ansicht von hinten. Eine mögliche Anordnung einer als Armlehne 18, 18' ausgebildeten Versorgungseinheit, die fest auf der Sitzquerstruktur angeordnet ist, ist damit realisiert. Die Passagierversorgungsfunktionen in den Armlehnen 18, 18' sind somit aus Sicht eines sitzenden Passagieres erkennbar. Ein drehbarer und in die Armlehne 18' einklappbarer LCD-Bildschirm 39 ist an einer Seite des Sitzteiles 6 angeordnet. Ebenfalls in dieser Armlehne 18' sind eine Sauerstoffmaske 16 und eine weitere Sauerstoffmaske für Personen, die sich in den Gängen befinden, angeordnet. An der anderen Seite des Sitzteiles 6 befindet sich die Armlehne 18, die Luftdüsen 17, 17', eine Bedieneinrichtung 40 und eine teleskopierbare Lampe 14 enthält.

Den beschriebenen Ausführungsformen gemäß Fign. 1 bis 13 ist gemeinsam, daß die Funktionen einer Passagierversorgungseinheit jeweils in einem Bauteil untergebracht sind, der jedem Passagiersitz 2, 3 oder 4 im Sitzbereich des Fluggastes zugeordnet ist. Dieses Bauteil wird bei Veränderungen des Sitzlayouts innerhalb der Passagierkabine mit dem entsprechenden Sitz mitwandern, ohne daß Versorgungsfunktionen unterbrochen und Verbindungen umgesteckt werden müssen. Mit flexiblen Versorgungsanschlüssen 24 ist eine schnelle Ankopplung an eine gemeinsame Versorgungsleitung 25 ermöglicht. Damit können Montage- und notwendige Bodenzeiten des Flugzeuges erheblich verringert werden. Das die Versorgungselemente beinhaltende Bauteil ist jedoch kein baulicher Bestandteil des Passagiersitzes.

## Patentansprüche

1. Passagierkabine, insbesondere in einem Flugzeug, mit mindestens einem Passagiersitz (2, 3, 4) und mindestens einer Versorgungseinheit (8, 8A, 8B, 8C, 8D) für Passagiere, wobei die Versorgungseinheit (8, 8A, 8B, 8C, 8D) mit Komfort- und Bedienelementen, wie Leseleuchte (14), Stewardruftaste, Lautsprecher (15), Luftdüse (17), Sauerstoffmaske (16) und -generator (20) und optische Anzeigeelemente (19) ausgestattet ist und mindestens eine Zuführleitung (23) zwischen einer Versorgungsleitung (25) und der mindestens einen Versorgungseinheit (8, 8A, 8B, 8C, 8D) vorgesehen ist, **dadurch gekennzeichnet, daß** die Versorgungseinheit (8, 8A, 8B, 8C, 8D) in Ergänzung eines Passagiersitzes (2, 3, 4) vorgesehen und als eine Säule (8; 9; 10; 28; 29) ausgebildet ist, die seitlich des zugeordneten Sitzes (2, 3, 4) angeordnet ist.

2. Passagierkabine nach Anspruch 1,
**dadurch gekennzeichnet, daß**
zumindest ein Teil der Säule (8) eine Armlehne (18; 33) bildet.

3. Passagierkabine nach einem der Ansprüche 1 oder 2,
**dadurch gekennzeichnet, daß**
die zumindest ein Teil der Säule (8) im Kopfbereich als Kopfteil (13) endet.

4. Passagierkabine nach einem der Ansprüche 1 bis 3,
**dadurch gekennzeichnet, daß**
die Säule (8; 29) im hinteren Bereich des Sitzes (2, 3, 4) auf dem Fußboden der Passagierkabine fußt.

5. Passagierkabine nach einem der Ansprüche 1 bis 3,
**dadurch gekennzeichnet, daß**
die Säule (9; 10) im vorderen Bereich des Sitzes (2, 3, 4) auf dem Fußboden der Passagierkabine fußt.

6. Passagierkabine nach einem der Ansprüche 1 bis 3,
**dadurch gekennzeichnet, daß**
die Säule (8A bis 8D) im unteren Bereich mit Aussparungen (11) versehen ist, die auf einem Querträger (22) eines die Sitzteile tragenden Traggestells (7) adaptiert sind.

7. Passagierkabine nach einem der Ansprüche 1 bis 6,
**dadurch gekennzeichnet, daß**
am rückwärtigen Teil der Säule (8A bis 8D; 28) Komfort- oder Bedienelemente angeordnet sind, die für den hinteren Passagiersitz Versorgungsfunktionen übernehmen.

8. Passagierkabine nach einem der Ansprüche 1 bis 7,
**dadurch gekennzeichnet, daß**
die Versorgungseinheiten (8; 9; 10; 29) einer Sitzgruppe (1) über Querverbindungen (21, 23) mit einem gemeinsamen Versorgungsanschluß (24) verbunden sind, der mit der vorzugsweise im Fußbodenbereich der Kabinenseitenwand (26) verlaufenden Versorgungsleitung (25) adaptiert ist.

## Claims

1. Passenger cabin, particularly in an aircraft, having at least one passenger seat (2, 3, 4) and at least one service unit (8, 8A, 8B, 8C, 8D) for passengers, the said service unit (8, 8A, 8B, 8C, 8D) being equipped with comfort elements and operating elements, such as a reading light (14), steward-summoning key, loudspeaker (15), air nozzle (17), oxygen mask (16), oxygen-generator (2) and optical indicating elements (19), and at least one feed line (23) being provided between a supply line (25) and the service unit (8, 8A, 8B, 8C, 8D), of which there is at least one,
**characterised in that** the service unit (8, 8A, 8B, 8C, 8D) is provided as an adjunct to a passenger seat (2, 3, 4) and is constructed as a column (8; 9; 10; 28; 29) which is disposed beside the associated seat (2, 3, 4).

2. Passenger cabin according to claim 1,
**characterised in that**
at least part of the column (8) forms an armrest (18; 33).

3. Passenger cabin according to one of claims 1 or 2,
**characterised in that**
at least part of the column (8) ends as a head part (13) in the head region.

4. Passenger cabin according to one of claims 1 to 3,
**characterised in that**
the column (8; 29) rests on the floor of the passenger cabin in the rear region of the seat (2, 3, 4).

5. Passenger cabin according to one of claims 1 to 3,
**characterised in that**
the column (9; 10) rests on the floor of the passenger cabin in the front region of the seat (2, 3, 4).

6. Passenger cabin according to one of claims 1 to 3,
**characterised in that**
the column (8A to 8D) is provided, in the lower region, with clearances (11) which are adapted to a cross-beam (22) of a carrying frame (7) carrying the seat parts.

7. Passenger cabin according to one of claims 1 to 6,
**characterised in that**
comfort elements or operating elements, which undertake service functions for the rear passenger seat, are disposed on the rearward part of the columns (8A to 8D; 28).

8. Passenger cabin according to one of claims 1 to 7,
**characterised in that**
the service units (8; 9; 10; 29) of a group of seats (1) are connected, via cross-connections (21, 23), to a common supply link (24) which is adapted to the supply line (25) which preferably extends in the floor region of the side wall (26) of the cabin.

## Revendications

1. Cabine de passagers, et plus particulièrement d'un avion, avec au moins un siège de passagers (2, 3, 4), une unité de services (8, 8A, 8B, 8C, 8D) pour passagers, laquelle unité (8, 8A, 8B, 8C, 8D) est équipée d'éléments de confort et de services comme un feu à lire (14), un bouton pour appeler le steward, des haut-parleurs (15), un gicleur d'air (17), un masque à oxygène (16), un générateur d'oxygène (20), des éléments d'affichage optique (19), au moins une conduite de distribution (23) entre une conduite d'alimentation (25) et au moins une unité de services (8, 8A, 8B, 8C, 8D), caractérisée en ce que l'unité de services (8, 8A, 8B, 8C, 8D) vient compléter un siège de passagers (2, 3, 4) sous la forme d'une colonne (8; 9; 10; 28; 29) disposée sur le côté de ce même siège.

2. Cabine de passagers selon la revendication 1, et caractérisée en ce que une partie au moins de la colonne (8) forme un accoudoir (18; 33)

3. Cabine de passagers selon la revendication 1 ou 2, et caractérisée en ce que une partie au moins de la colonne (8) se termine à hauteur de tête, sous la forme d'une ogive. (13)

4. Cabine de passagers selon l'une ou l'autre des revendications 1 à 3, et caractérisée en ce que, dans la partie arrière du siège (2, 3, 4), la colonne (8; 29) est raccordée au plancher de la cabine.

5. Cabine de passagers selon l'une ou l'autre des revendications 1 à 3, et caractérisée en ce que, dans la partie avant du siège (2, 3, 4), la colonne (8; 29) est raccordée au plancher de la cabine.

6. Cabine de passagers selon l'une ou l'autre des revendications 1 à 3, et caractérisée en ce que la colonne (8A à 8D), est dotée, dans sa partie inférieure, d'évidements (11) adaptés à la traverse (22) d'un châssis (7) supportant les différentes parties du siège.

7. Cabine de passagers selon l'une ou l'autre des revendications 1 à 6, et caractérisée en ce que des éléments de confort ou de service sont disposés sur la partie de la colonne orientée vers l'arrière (8A à 8D; 28).

8. Cabine de passagers selon l'une ou l'autre des revendications 1 à 7, et caractérisée en ce que les unités de service (8; 9; 10; 29) d'un ensemble de sièges (1) sont raccordées par le biais de raccordements transversaux (21, 23) à un seul élément commun lui-même adapté en fonction d'une conduite d'alimentation (25) reliée à la partie inférieure de la paroi latérale de la cabine (26).
